# EUROPEAN PATENT SPECIFICATION

(11) **EP 4 423 612 B1**
(45) Date of publication and mention of the grant of the patent: **02.12.2026**
(21) Application number: 22886291.8
(22) Date of filing: 29.10.2022
(51) Int. Cl.: G06F 11/30, G06Q 10/04, G06F 9/50, G06F 11/00, G06F 11/34

(54) **SYSTEM AND METHOD FOR APPLICATION PROGRAMMING INTERFACE FORECASTING**
SYSTEM UND VERFAHREN ZUR VORHERSAGE EINER ANWENDUNGSPROGRAMMIERUNGSSCHNITTSTELLE
SYSTÈME ET PROCÉDÉ DE PRÉVISION D'INTERFACE DE PROGRAMMATION D'APPLICATION

(30) Priority: 30.10.2021 IN 202121049906
(43) Date of publication of application: 04.09.2024
(73) Proprietor: Jio Platforms Limited, Ahmedabad, Gujarat 380006 (IN)
(72) Inventor: MUNAGEKAR, Ameya, Mumbai Maharashtra 400053 (IN); KUMAR, Akansha, Hyderabad Telangana 500050 (IN); DHONDGE, Kamlesh, Pune Maharashtra 411019 (IN); PATLOLLA, Akhil Patel, Telangana 502001 (IN); GUPTA, Rajeev, Mumbai Maharashtra 400050 (IN)
(74) Representative: Potter Clarkson
(86) International application number: PCT/IB2022/060435
(87) International publication number: WO 2023/073654

(56) References cited:
- CN-A- 104 038 392
- US-A1- 2002 152 305
- US-A1- 2020 175 456
- US-A1- 2020 364 638
- US-A1- 2020 364 638
- US-A1- 2020 366 572
- US-A1- 2021 173 719

## Description

### FIELD OF INVENTION

The embodiments of the present disclosure herein relate to a predictive analysis of various types of events or other complex situations, and more particularly forecasting of load of one or more Application Programming Interface (API) on one or more available machines in an API management system.

### BACKGROUND OF THE INVENTION

The following description of related art is intended to provide background information pertaining to the field of the disclosure. This section may include certain aspects of the art that may be related to various features of the present disclosure. However, it should be appreciated that this section be used only to enhance the understanding of the reader with respect to the present disclosure, and not as admissions of prior art.

Application Programming Interfaces (APIs) are communication mechanism between different services. An API lifecycle is usually driven by an API provider (who may be responding to consumer requests). APIs may exist in various versions and software lifecycle states within a system landscape and are frequently developed like any software by API developers (including those of API consumers) using an integrated development environment (IDE). After a successful test within an IDE, a particular API is usually deployed in a test/quality landscape for further tests (e.g., integration tests). After further successful tests, the API is deployed in a productive landscape. These states (e.g., development version, test/quality version, and productive version) are typically managed by the API provider. Services hold the business logic for a task. These APIs are exposed for a consumer for usage over network with many different interfaces or custom home-made interfaces.As the services grow, the number of APIs increase in size and it becomes difficult to manage all remote APIs at a single place for an organization.

Problems occur when APIs grow within an enterprise and there is a huge number of inconsistent APIs when there is a need of reinventing common modules, locating and consuming multiple API from different teams, onboarding new APIs as per end user's requirements, using a chain of APIs for a particular task and the like. Moreover, since the API calls vary each day and depends on the multiple factors such as promotional and environmental features, allocating same resources every day would be expensive. It is also difficult to predict the future load on API to optimize and allocate the resources. D1 (US 2021/173719 A1) describes a method performed by a distributed computing system comprising a plurality of computers.

There is therefore a need in the art to provide a method and a system that can overcome the shortcomings of the existing prior art.

### OBJECTS OF THE PRESENT DISCLOSURE

Some of the objects of the present disclosure, which at least one embodiment herein satisfies are as listed herein below.

An object of the present disclosure is to provide for a method and system to predict load of APIs based on time-based features such as weekends, weekdays, holidays for a future date.

An object of the present disclosure is to provide for a method and system for predicting load of a plurality of APIs.

An object of the present disclosure is to provide for a method and system to predict time taken by an API with respect to the data size passed as an input.

### SUMMARY

The invention is defined by the independent claims. Particular embodiments are defined by the subject-matter of the dependent claims. Embodiments which do not fall within the scope of the claims are to be interpreted merely as examples useful for understanding the invention. This section is provided to introduce certain objects and aspects of the present invention in a simplified form that are further described below in the detailed description. This summary is not intended to identify the key features or the scope of the claimed subject matter.

In an aspect, the present disclosure provides a system for facilitating forecasting execution time of a plurality of application programming interfaces (API). The system includes a processor coupled to one or more computing devices in a network, the processor further coupled with a memory that stores instructions which when executed by the processor cause the system to receive a set of parameters from the one or more computing devices, the set of parameters associated with the plurality of APIs and receive a historical log of execution of the plurality of APIs from a database, the historical log of execution of the plurality of APIs associated with the execution of the plurality of APIs. Based on the received set of parameters and the received historical log of execution of the plurality of APIs, the system is configured to determine, a number of resources required for each day, predict, a future load on each API based on the number of resources required for each day and forecast, an execution time required for each API based on the prediction of the future load on each API. The system is further configured to optimize the number of resources required for each day based on the forecasting of time required for each API and allocate one or more resources to an API based on the optimization of the number of resources.

In an embodiment, the set of parameters includes combination of promotional, environmental features, data size, central processing unit (CPU), memory and graphical processing unit (GPU) utilization associated with the APIs in the queue.

In an embodiment, the system may be configured to forecast, by a neural network module, the execution time of each API In an embodiment, the neural network module may be associated with the processor.

In an embodiment, the system may be further configured to generate a trained model, by the neural network module, to train the system for forecasting the execution time.

In an embodiment, the system may be further configured to determine a cumulative service-level agreement (SLA) of each API applicable for each computing device (104) based on the received set of parameters.

In an embodiment, the historical log of execution of the plurality of APIs are based on calendar events along with times taken for each API execution with respect to the data size provided for the API for execution.

In an embodiment, the system may be further configured to check if the cumulative SLA of each said API is affected by increasing request or data load based in the historical log of execution of the plurality of APIs.

In an embodiment, the system may be further configured to maintain the cumulative SLA when actual load increases based on the prediction of the future load.

In an embodiment, the system may be further configured to minimize a combination of execution, run time and traffic in the API queue based on the prediction and optimization made.

In an aspect, the present disclosure provides a user equipment (UE) for facilitating forecasting execution time of a plurality of application programming interfaces (API). The UE may include an edge processor and a receiver. The edge processor may be coupled to one or more computing devices in a network, the edge processor further coupled with a memory that stores instructions which when executed by the edge processor may cause the UE to receive a set of parameters from the one or more computing devices, the set of parameters associated with the plurality of APIs and receive a historical log of execution of the plurality of APIs from a database, the historical log of execution of the plurality of APIs associated with the execution of the plurality of APIs. Based on the received set of parameters and the received historical log of execution of the plurality of APIs, the UE may be configured to determine, a number of resources required for each day, predict, a future load on each API based on the number of resources required for each day and forecast, an execution time required for each API based on the prediction of the future load on each API.

In an aspect, the present disclosure provides a method for facilitating forecasting execution of a plurality of application programming interfaces (API). The method may include the step of receiving, by a processor, a set of parameters from the one or more computing devices, the set of parameters associated with the plurality of APIs. In an embodiment, the processor may be coupled to the one or more computing devices in a network and the processor may be further coupled with a memory that stores instructions executed by the processor. The method may also include the step of receiving, by the processor, a historical log of execution of the plurality of APIs from a database, the historical log of execution of the plurality of APIs associated with the execution of the plurality of APIs. Based on the received set of parameters and the received historical log of execution of the plurality of APIs, the method further may include the step of determining, by the processor, a number of resources required for each day and the step of predicting, by the processor, a future load on each said API based on the number of resources required for each day. Furthermore, the method may include the step of forecasting, by the processor, an execution time required for each API based on the prediction of the future load on each API.

### BRIEF DESCRIPTION OF DRAWINGS

The accompanying drawings, which are incorporated herein, and constitute a part of this invention, illustrate exemplary embodiments of the disclosed methods and systems in which like reference numerals refer to the same parts throughout the different drawings. Components in the drawings are not necessarily to scale, emphasis instead being placed upon clearly illustrating the principles of the present invention. Some drawings may indicate the components using block diagrams and may not represent the internal circuitry of each component. It will be appreciated by those skilled in the art that invention of such drawings includes the invention of electrical components, electronic components or circuitry commonly used to implement such components.
FIG. 1 that illustrates an exemplary network architecture in which or with which the proposed system of the present disclosure can be implemented, in accordance with an embodiment of the present disclosure.
FIG. 2A illustrates an exemplary representation of the system (110) for forecasting execution time of APIs, in accordance with an embodiment of the present disclosure.
FIG. 2B illustrates an exemplary representation of the user equipment (UE) (108) for forecasting execution time of APIs, in accordance with an embodiment of the present disclosure.
FIG. 2C illustrates an exemplary method flow diagram for forecasting execution time of APIs, in accordance with an embodiment of the present disclosure.
FIGs. 3A-3B illustrate exemplary representation of a high-level architecture of the Neural Network based regressor training and inference module in accordance with an embodiment of the present disclosure.
FIG. 4 illustrates an exemplary representation of neural network, in accordance with an embodiment of the present disclosure.
FIGs. 5A-5B illustrate exemplary representation of a high-level architecture of Boosting based regressor training and inference module in accordance with an embodiment of the present disclosure. in accordance with an embodiment of the present disclosure.
FIG. 5C illustrates an exemplary representation of a boost model regressor, in accordance with an embodiment of the present disclosure.
FIG. 6 illustrates an exemplary computer system in which or with which embodiments of the present invention can be utilized in accordance with embodiments of the present disclosure.

The foregoing shall be more apparent from the following more detailed description of the invention.

### DETAILED DESCRIPTION OF INVENTION

In the following description, for the purposes of explanation, various specific details are set forth in order to provide a thorough understanding of embodiments of the present disclosure. It will be apparent, however, that embodiments of the present disclosure may be practiced without these specific details. Several features described hereafter can each be used independently of one another or with any combination of other features. An individual feature may not address all of the problems discussed above or might address only some of the problems discussed above. Some of the problems discussed above might not be fully addressed by any of the features described herein.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment.

The present invention provides a robust and effective solution to an entity or an organization by providing a forecast of load of APIs using the historical log of execution data.

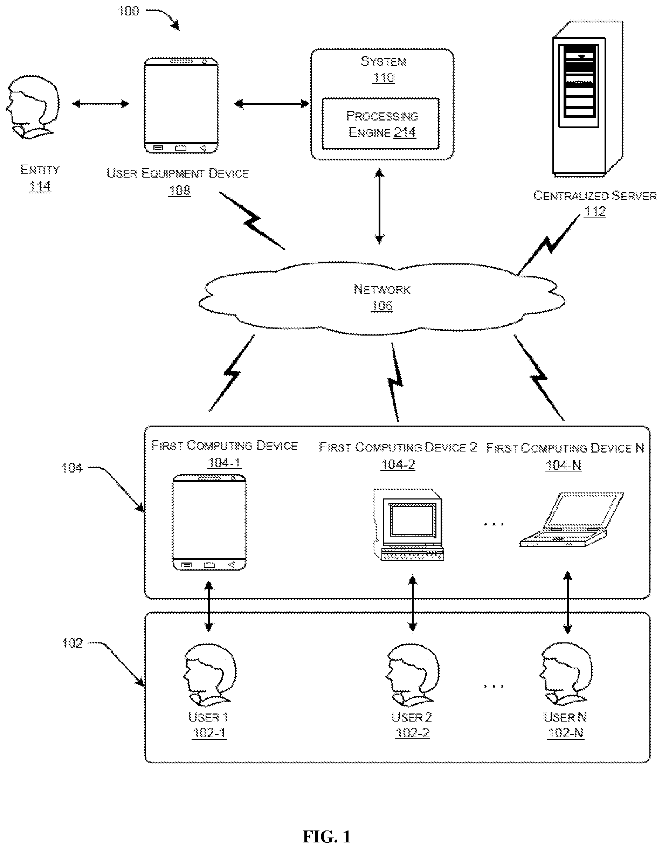

Referring to FIG. 1 that illustrates an exemplary network architecture (100) in which or with which API management system (110) (interchangeably referred of the present disclosure can be implemented, in accordance with an embodiment of the present disclosure. As illustrated, the exemplary architecture (100) includes one or more communicably coupled computing devices (104-1, 104-2,...104-N) (also referred to as machines herein) that communicate across a network (106) (note that although only network 106 connections have been labelled in FIG. 1, one or more of the other indicated connections between components can also be considered part of network 106). In some implementations, the system (110) or portions of the system (110) can operate within a cloud-computing-based environment associated with a centralised server (112). As an example, and not by way of limitation, the user computing device (104) may be operatively coupled to the centralised server (112) through the network (106) and may be associated with the entity (114). Examples of the user computing devices (104) can include, but are not limited to a smart phone, a portable computer, a personal digital assistant, a handheld phone and the like.

The system (110) may further be operatively coupled to a second computing device (108) (also referred to as the user computing device or user equipment (UE) hereinafter) associated with the entity (114). The entity (114) may include a company, a hospital, an organisation, a university, a lab facility, a business enterprise, or any other secured facility that may require features associated with a plurality of API. In some implementations, the system (110) may also be associated with the UE (108). The UE (108) can include a handheld device, a smart phone, a laptop, a palm top and the like. Further, the system (110) may also be communicatively coupled to the one or more first computing devices (104) via a communication network (106).

In an aspect, the system (110) receives a set of parameters associated with a computing device or an application programming interface. receive a historical log of execution of the plurality of APIs from a database, the past execution log data associated with the execution of the plurality of APIs. Based on the received set of parameters, determine, a number of resources required for each day and then predict, a future or an incoming load on each API based on the number of resources required for each day. The system is further configured to forecast, an execution time required for each API based on the prediction of the future load on each API.

In an exemplary embodiment, the set of parameters may include promotional, environmental features, data size, central processing unit (CPU), memory and graphical processing unit (GPU) utilization of the APIs in the queue. The historical log of execution of different APIs from the system, based on calendar events along with times taken for an API execution with respect to the data size provided for API for execution.

In an exemplary embodiment, for predicting the future load, a set of instructions may be applied. The set of instructions can be a prediction method that may provide at predictive analysis on an incoming load to load to for future calendar events.

In an embodiment, the system may be configured to forecast, by a neural network module, the execution time of each API and is further configured to generate a trained model, by the neural network module, to train the system for forecasting the execution time.

In an embodiment, the system may be further configured to determine a cumulative service-level agreement (SLA) of each API applicable for each computing device (104) based on the received set of parameters.

In an exemplary embodiment, based on the prediction of incoming load, and primarily prediction of incoming load for future dates that can be used by other modules to provide resources, allotment to maintain API's SLA when actual load increases. This in turn may minimize execution, run time and traffic in the API management system.

In an embodiment, the one or more computing devices (104) may communicate with the system (110) via set of executable instructions residing on any operating system, including but not limited to, Android TM, iOS TM, Kai OS TM and the like. In an embodiment, to one or more computing devices (104), may include, but not limited to, any electrical, electronic, electro-mechanical or an equipment or a combination of one or more of the above devices such as mobile phone, smartphone, virtual reality (VR) devices, augmented reality (AR) devices, laptop, a general-purpose computer, desktop, personal digital assistant, tablet computer, mainframe computer, or any other computing device, wherein the computing device may include one or more in-built or externally coupled accessories including, but not limited to, a visual aid device such as camera, audio aid, a microphone, a keyboard, input devices for receiving input from a user such as touch pad, touch enabled screen, electronic pen, receiving devices for receiving any audio or visual signal in any range of frequencies and transmitting devices that can transmit any audio or visual signal in any range of frequencies. It may be appreciated that the to one or more computing devices (104) may not be restricted to the mentioned devices and various other devices may be used. A smart computing device may be one of the appropriate systems for storing data and other private/sensitive information.

In an embodiment, the system (110) may include a processor coupled with a memory, wherein the memory may store instructions which when executed by the one or more processors may cause the system to access content stored in a network.

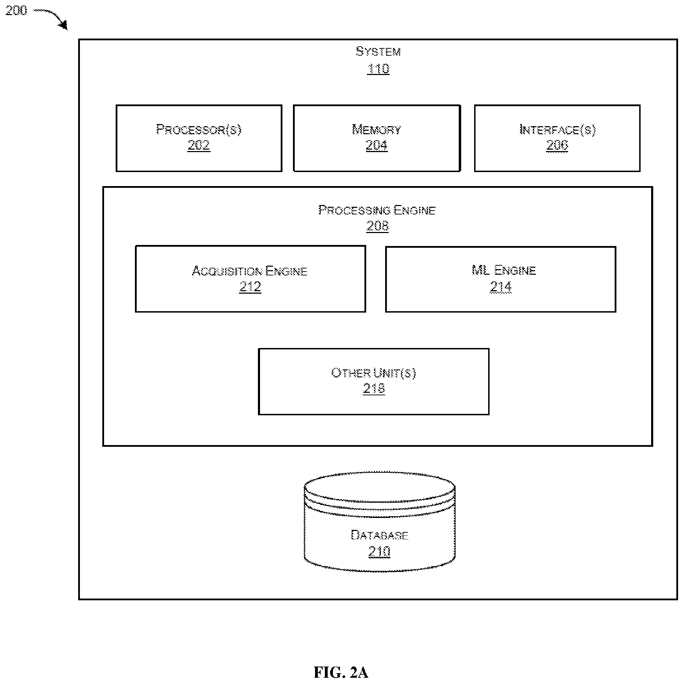

FIG. 2A with reference to FIG. 1, illustrates an exemplary representation of system (110) for facilitating scheduling of APIs, in accordance with an embodiment of the present disclosure. In an aspect, the system (110) comprises one or more processor(s) (202). The one or more processor(s) (202) may be implemented as one or more microprocessors, microcomputers, microcontrollers, digital signal processors, central processing units, logic circuitries, and/or any devices that process data based on operational instructions. Among other capabilities, the one or more processor(s) (202) are configured to fetch and execute computer-readable instructions stored in a memory (204) of the system (110). The memory (204) may be configured to store one or more computer-readable instructions or routines in a non-transitory computer readable storage medium, which may be fetched and executed to create or share data packets over a network service. The memory (204) may comprise any non-transitory storage device including, for example, volatile memory such as RAM, or non-volatile memory such as EPROM, flash memory, and the like.

In an embodiment, the system (110) may include an interface(s) 206. The interface(s) 206 may comprise a variety of interfaces, for example, interfaces for data input and output devices, referred to as I/O devices, storage devices, and the like. The interface(s) 206 may facilitate communication of the system (110). The interface(s) 204 may also provide a communication pathway for one or more components of the system (110). Examples of such components include, but are not limited to, processing engine(s) 208 and a database 210.

The processing engine(s) (208) may be implemented as a combination of hardware and programming (for example, programmable instructions) to implement one or more functionalities of the processing engine(s) (208). In examples described herein, such combinations of hardware and programming may be implemented in several different ways. For example, the programming for the processing engine(s) (208) may be processor executable instructions stored on a non-transitory machine-readable storage medium and the hardware for the processing engine(s) (208) may comprise a processing resource (for example, one or more processors), to execute such instructions. In the present examples, the machine-readable storage medium may store instructions that, when executed by the processing resource, implement the processing engine(s) (208). In such examples, the system (110) may comprise the machine-readable storage medium storing the instructions and the processing resource to execute the instructions, or the machine-readable storage medium may be separate but accessible to the system (110) and the processing resource. In other examples, the processing engine(s) (208) may be implemented by electronic circuitry.

The processing engine (208) may include one or more engines selected from any of a data acquisition engine (212), a machine learning (ML) engine (214), and other engines (216). The processing engine (208) may further include a Neural Network and Grading boosting training / inference algorithms.

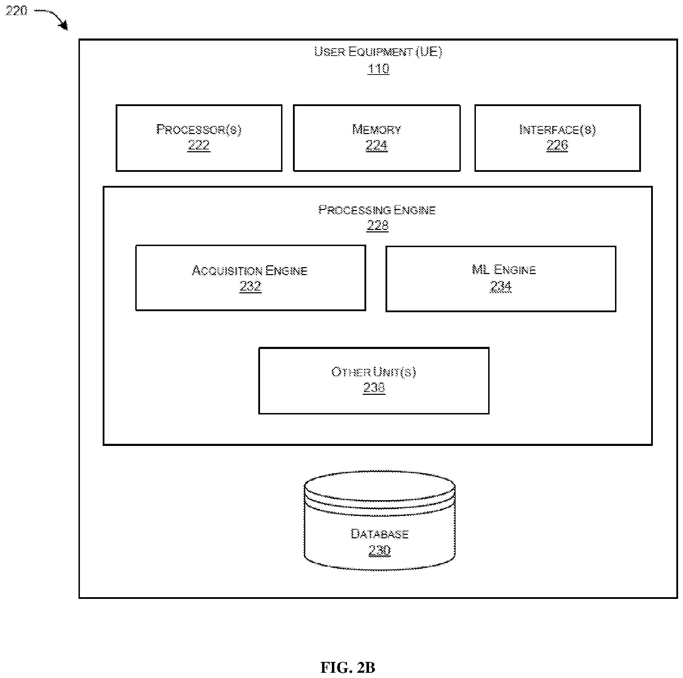

FIG. 2B illustrates an exemplary representation (220) of the user equipment (UE) (108), in accordance with an embodiment of the present disclosure. In an aspect, the UE (108) may comprise an edge processor (222). The edge processor (222) may be implemented as one or more microprocessors, microcomputers, microcontrollers, digital signal processors, central processing units, logic circuitries, and/or any devices that process data based on operational instructions. Among other capabilities, the edge processor(s) (222) may be configured to fetch and execute computer-readable instructions stored in a memory (224) of the UE (108). The memory (224) may be configured to store one or more computer-readable instructions or routines in a non-transitory computer readable storage medium, which may be fetched and executed to create or share data packets over a network service. The memory (224) may comprise any non-transitory storage device including, for example, volatile memory such as RAM, or non-volatile memory such as EPROM, flash memory, and the like.

In an embodiment, the UE (108) may include an interface(s) 226. The interface(s) 206 may comprise a variety of interfaces, for example, interfaces for data input and output devices, referred to as I/O devices, storage devices, and the like. The interface(s) 206 may facilitate communication of the UE (108). Examples of such components include, but are not limited to, processing engine(s) 228 and a database (230).

The processing engine(s) (228) may be implemented as a combination of hardware and programming (for example, programmable instructions) to implement one or more functionalities of the processing engine(s) (228). In examples described herein, such combinations of hardware and programming may be implemented in several different ways. For example, the programming for the processing engine(s) (228) may be processor executable instructions stored on a non-transitory machine-readable storage medium and the hardware for the processing engine(s) (228) may comprise a processing resource (for example, one or more processors), to execute such instructions. In the present examples, the machine-readable storage medium may store instructions that, when executed by the processing resource, implement the processing engine(s) (228). In such examples, the UE (108) may comprise the machine-readable storage medium storing the instructions and the processing resource to execute the instructions, or the machine-readable storage medium may be separate but accessible to the UE (108) and the processing resource. In other examples, the processing engine(s) (228) may be implemented by electronic circuitry.

The processing engine (228) may include one or more engines selected from any of a data acquisition engine (232), a machine learning (ML) engine (234), and other engines (236).

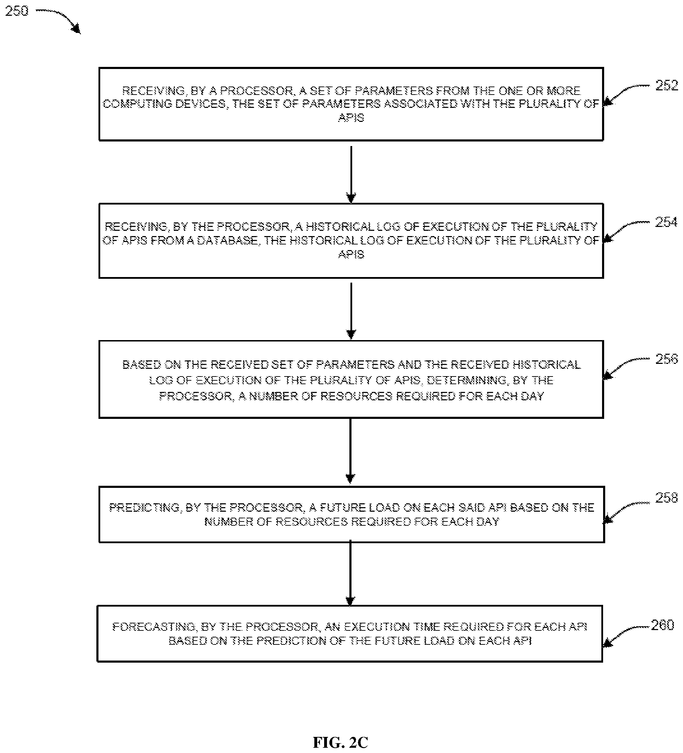

FIG. 2C illustrates an exemplary representation of the proposed method (250) for optimizing and scheduling APIs. The method (250) includes at 252, the step of receiving, by a processor, a set of parameters from the one or more computing devices, the set of parameters associated with the plurality of APIs.

The method (250) also includes at 254, the step of receiving, by the processor, a historical log of execution of the plurality of APIs from a database, the historical log of execution of the plurality of APIs associated with the execution of the plurality of APIs. Based on the received set of parameters, the method further includes at 256, the step of determining, by the processor, a number of resources required for each day and at 258, the step of predicting, by the processor, a future load on each said API based on the number of resources required for each day.

Furthermore, the method includes at 260, the step of forecasting, by the processor, an execution time required for each API based on the prediction of the future load on each API.

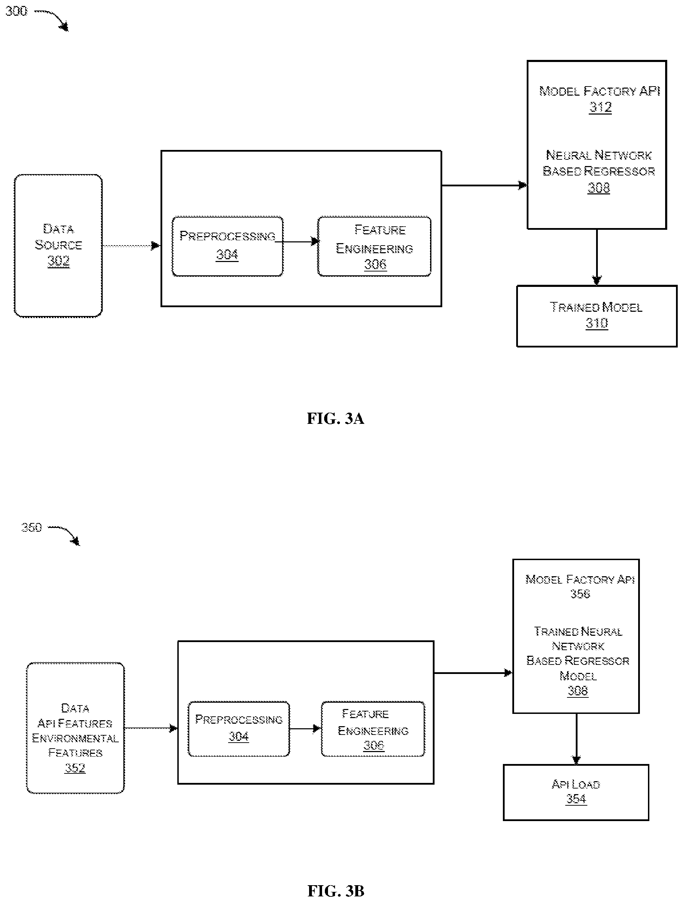

FIGs. 3A-3B illustrate exemplary representation of a high-level architecture of the Neural network based regressor training and inference, in accordance with an embodiment of the present disclosure.As illustrated, in an aspect, the proposed system may include a data source (302). The data source (302) can include a set of parameters or features associated with one or more APIs. The data from the data source may be sent for pre-processing (304) and feature engineering (306) and the data may be then collected by an API model factory (312) equipped with a neural network based regressor (308) to obtain a trained model (310). With reference to FIG. 3A, FIG. 3B illustrates an exemplary embodiment with a data source (352) having environmental features along with the API parameters which are pre-processed (306) and featured engineered (308) and passed on an API factory (356) equipped with a Trained Neural Network Based Regressor Model (308) to obtain an API load (354).

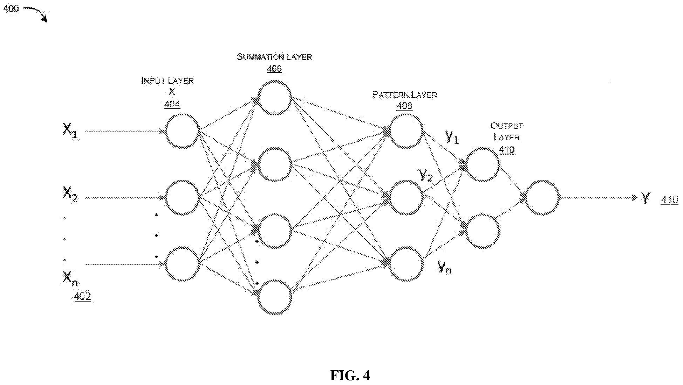

FIG. 4 illustrates an exemplary representation of neural network, in accordance with an embodiment of the present disclosure.

As illustrated, in an embodiment, the neural network may include a set of inputs X1, X2...Xn (402), provided to an input layer (404), a pattern layer (406), a summation layer (408), an output layer (410) to obtain the output Y (412).

In an exemplary embodiment, a neural network-based regression model to predict the load on the API may be given by $API LOAD = {f}_{\left(API,environmental feature\right)}$

In an exemplary embodiment, a Mean Absolute Percentage Error for error in prediction may be given by $MAPE = \frac{100}{n} {\sum }_{t = 1}^{n} \left|\frac{{A}_{t -} {F}_{t}}{{A}_{t}}\right|$ where *Aₜ* is the actual value of API Load and *Fₜ* is the forecast value of API Load. Their difference is divided by the actual value *Aₜ*. The absolute value in this ratio is summed for every forecasted point in time and divided by the number of fitted points *n*.

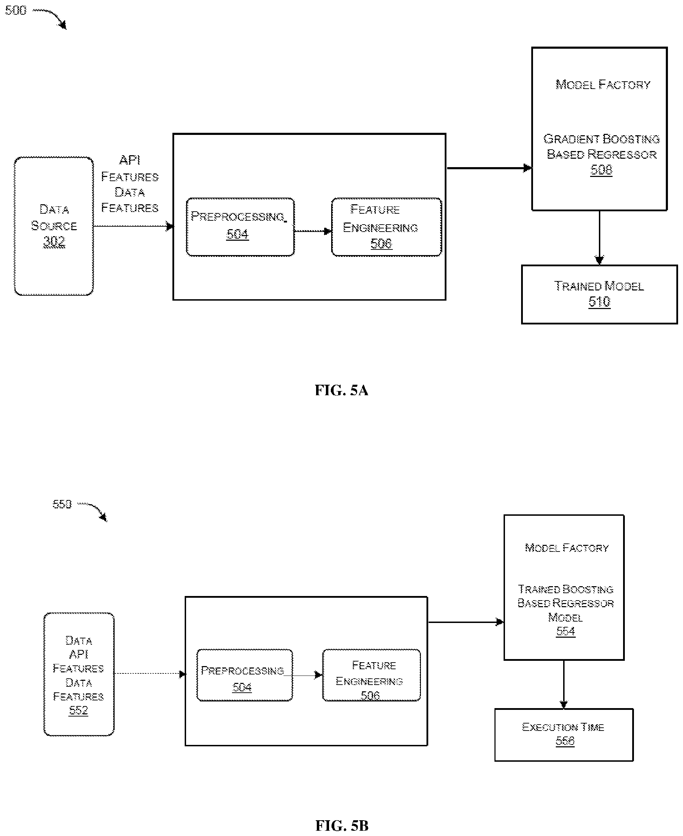

FIGs. 5A-5B illustrate exemplary representation of a high-level architecture of the Gradient based regressor training and inference, in accordance with an embodiment of the present disclosure. As illustrated, in an aspect, the proposed system may include a data source (502). The data source (502) can include a set of parameters or features associated with one or more APIs. The data from the data source (502) may be sent for pre-processing (504) and feature engineering (506) and the data may be then collected by an API model factory (512) equipped with a gradient boosting based regressor (508) to obtain a trained model (510). With reference to FIG. 5A, FIG. 5B illustrates an exemplary embodiment with a data source (552) having environmental features along with API parameters which are pre-processed (504) and featured engineered (506) and passed on an API factory (554) with an execution time (556).

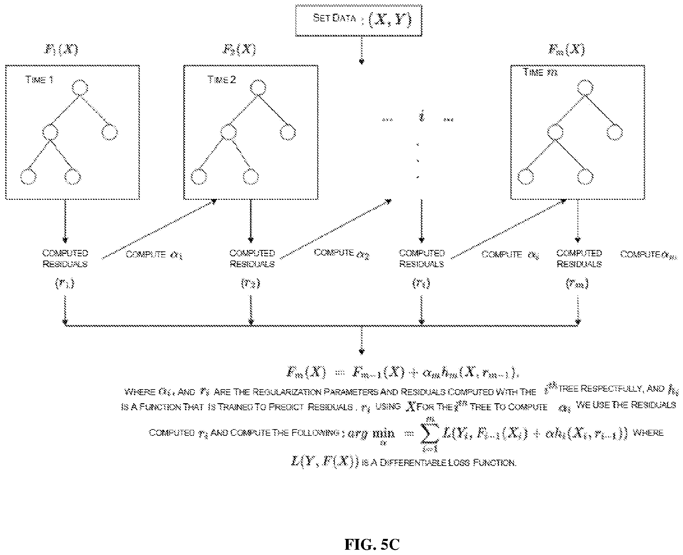

FIG. 5C illustrates an exemplary representation of a boost model regressor, in accordance with an embodiment of the present disclosure. As illustrated, *Fₘ* (*X*) = *F*_{*m*-1}(*X*) *+ αₘhₘ* (*X, r*_{*m*-1}). *αᵢ* and *rᵢ* are regularization parameters and residuals computed with the ith tree respectively and *hᵢ* is a function that is trained to predict residuals *rᵢ* using X for the ith tree. To compute *αᵢ* we use the residuals computed *rᵢ* compute the following $arg ′ min = {\sum }_{i = 1}^{m} L \left({Y}_{i} {F}_{i - 1}\left({X}_{i}\right)+{αh}_{i}\left({X}_{i}, {r}_{i - 1}\right)\right.$ where *L*(*Y, F*(*X*)) is a differentiable loss function.

The system predicts the execution time of an API of the plurality of APIs.. For example, for gradient boosting based regressor model to predict the API execution time, the execution time may be given by$Execution time = {f}_{\left(API, Data features \right)}$

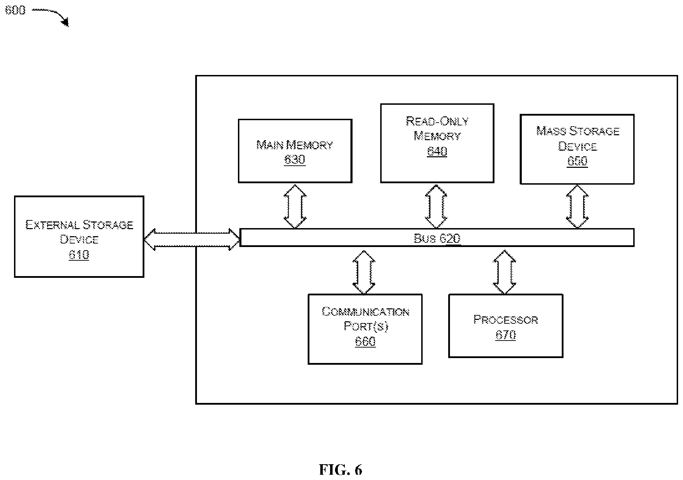

FIG. 6 illustrates an exemplary computer system in which or with which embodiments of the present invention can be utilized in accordance with embodiments of the present disclosure. As shown in FIG. 6, computer system 600 can include an external storage device 610, a bus 620, a main memory 630, a read only memory 640, a mass storage device 650, communication port 660, and a processor 670. A person skilled in the art will appreciate that the computer system may include more than one processor and communication ports. Processor 660 may include various modules associated with embodiments of the present invention.. Communication port 660 may be chosen depending on a networkor any network to which computer system connects. Memory 630 can be Random Access Memory (RAM), or any other dynamic storage device commonly known in the art. Read-only memory 640 can be any static storage device(s). Mass storage 650 may be any current or future mass storage solution, which can be used to store information and/or instructions.

Bus 620 communicatively couples processor(s) 670 with the other memory, storage and communication blocks.

Optionally, operator and administrative interfaces, e.g. a display, keyboard, and a cursor control device, may also be coupled to bus 620 to support direct operator interaction with a computer system. Other operator and administrative interfaces can be provided through network connections connected through communication port 660.. Components described above are meant only to exemplify various possibilities. In no way should the aforementioned exemplary computer system limit the scope of the present disclosure.

While considerable emphasis has been placed herein on the preferred embodiments, it will be appreciated that many embodiments can be made and that many changes can be made in the preferred embodiments without departing from the principles of the invention. These and other changes in the preferred embodiments of the invention will be apparent to those skilled in the art from the disclosure herein, whereby it is to be distinctly understood that the foregoing descriptive matter to be implemented merely as illustrative of the invention and not as limitation.

A portion of the disclosure of this patent document contains material which is subject to intellectual property rights such as, but are not limited to, copyright, design, trademark, IC layout design, and/or trade dress protection, belonging to Jio Platforms Limited (JPL) or its affiliates (herein after referred as owner). The owner has no objection to the facsimile reproduction by anyone of the patent document or the patent disclosure, as it appears in the Patent and Trademark Office patent files or records, but otherwise reserves all rights whatsoever. All rights to such intellectual property are fully reserved by the owner.

### ADVANTAGES OF THE PRESENT DISCLOSURE

The present disclosure provides for a method and system to predict load of APIs based on time-based features such as weekends, weekdays, holidays for a future date.

The present disclosure provides for a method and system for predicting load of a plurality of APIs.

The present disclosure provides for a method and system to predict time taken by an API with respect to the data size passed as an input.

## Claims

1. A system (110) for facilitating forecasting execution of a plurality of application programming interfaces, APIs, the system (110) comprising:
a processor (202) coupled to one or more computing devices (104) in a network (106), wherein the processor (202) is further coupled with a memory (204), wherein said memory stores instructions which when executed by the processor (202) causes the system (110) to:
receive (252) a set of parameters from the one or more computing devices (104), the set of parameters associated with the plurality of APIs;
receive (254) a historical log of execution of the plurality of APIs from a database, the historical log of execution of the plurality of APIs associated with the execution of the plurality of APIs;
based on the received set of parameters and the received historical log of execution of the plurality of APIs, determine (256), a number of resources required for each day;
predict (258), a future load on each said API based on the number of resources required for each day;
forecast (260), an execution time required for each said API based on the prediction of
the future load on each said API;
optimize the number of resources required for each day based on the forecasting of time required for each said API; and
allocate one or more resources to an API based on the optimization of the number of resources.

2. The system (110) as claimed in claim 1, wherein the set of parameters includes combination of promotional, environmental features, data size, central processing unit, CPU, memory and graphical processing unit, GPU, utilization associated with the APIs in a queue.

3. The system (110) as claimed in claim 1, wherein the system (110) is configured to forecast, by a neural network module, the execution time of each said API, wherein the neural network module is associated with the processor (202).

4. The system (110) as claimed in claim 3, wherein the system (110) is further configured to generate a trained model, by the neural network module, to train the system for forecasting the execution time.

5. The system (110) as claimed in claim 2, wherein the system (110) is further configured to determine a cumulative service-level agreement, SLA, of each API applicable for each computing device (104) based on the received set of parameters.

6. The system (110) as claimed in claim 1, wherein the historical log of execution of the plurality of APIs are based on calendar events along with times taken for each API execution with respect to the data size provided for the API for execution.

7. The system (110) as claimed in claim 5, wherein the system (110) is further configured to check if the cumulative SLA of each said API is affected by increasing request or data load based in the historical log of execution of the plurality of APIs.

8. The system (110) as claimed in claim 7, wherein the system (110) is further configured to maintain the cumulative SLA when actual load increases based on the prediction of the future load.

9. The system (110) as claimed in claim 8, the system (110) is further configured to minimize a combination of execution, run time and traffic in an API queue based on the prediction and optimization made.

10. A method for facilitating forecasting execution of a plurality of application programming interfaces, APIs, the method comprising:
receiving (252), by a processor (202), a set of parameters from the one or more computing devices (104), the set of parameters associated with the plurality of APIs, wherein the processor (202) is coupled to the one or more computing devices (104) in a network (106), wherein the processor (202) is further coupled with a memory (204) that stores instructions executed by the processor (202);
receiving (254), by the processor (202), a historical log of execution of the plurality of APIs from a database, the historical log of execution of the plurality of APIs associated with the execution of the plurality of APIs;
based on the received set of parameters and the received historical log of execution of the plurality of APIs, determining (256), by the processor (202), a number of resources required for each day;
predicting (258), by the processor (202), a future load on each said API based on the number of resources required for each day:
forecasting (260), by the processor (202), an execution time required for each said API based on the prediction of the future load on each said API;
optimizing the number of resources required for each day based on the forecasting of time required for each said API; and
allocating one or more resources to an API based on the optimization of the number of resources.

11. The method as claimed in claim 10, wherein the set of parameters includes combination of promotional, environmental features, data size, central processing unit, CPU, memory and graphical processing unit, GPU, utilization associated with the APIs in a queue.

12. The method as claimed in claim 10, wherein the method further comprises the step of forecasting, by a neural network module, the execution time of each said API, wherein the neural network module is associated with the processor (202).

13. The method as claimed in claim 10, wherein the method further comprises the step of generating, by the neural network module, a trained model to train the system for the forecasting the execution time.

## Patentansprüche

1. System (110) zum Erleichtern der Prognose der Ausführung einer Vielzahl von Anwendungsprogrammierschnittstellen, APIs, wobei das System (110) umfasst:
einen Prozessor (202), gekoppelt an eine oder mehrere Rechenvorrichtungen (104) in einem Netzwerk (106), wobei der Prozessor (202) ferner mit einem Speicher (204) gekoppelt ist, wobei der Speicher Anweisungen speichert, die, wenn sie durch den Prozessor (202) ausgeführt werden, das System (110) veranlassen zum:
Empfangen (252) eines Parametersatzes von der einen oder den mehreren Rechenvorrichtungen (104), wobei der Parametersatz mit der Vielzahl von APIs verknüpft ist;
Empfangen (254) eines Verlaufsprotokolls der Ausführung der Vielzahl von APIs von einer Datenbank, wobei das Verlaufsprotokoll der Ausführung der Vielzahl von APIs mit der Ausführung der Vielzahl von APIs verknüpft ist;
basierend auf dem empfangenen Parametersatz und dem empfangenen Verlaufsprotokoll der Ausführung der Vielzahl von APIs, Bestimmen (256) einer Anzahl der für jeden Tag erforderlichen Ressourcen;
Vorhersagen (258) einer zukünftigen Last auf jeder API basierend auf der Anzahl der für jeden Tag erforderlichen Ressourcen;
Prognostizieren (260) einer für jede API erforderlichen Ausführungszeit basierend auf der Vorhersage der zukünftigen Last auf jeder API;
Optimieren der Anzahl der für jeden Tag erforderlichen Ressourcen basierend auf der Prognose der für jede API erforderlichen Zeit; und
Zuweisen einer oder mehrerer Ressourcen zu einer API basierend auf der Optimierung der Anzahl der Ressourcen.

2. System (110) nach Anspruch 1, wobei der Parametersatz eine Kombination aus Werbe- und Umgebungsmerkmalen, Datengröße, Auslastung des Speichers der zentralen Verarbeitungseinheit, CPU, und der Grafikverarbeitungseinheit, GPU, die mit den APIs in einer Warteschlange verknüpft sind, einschließt.

3. System (110) nach Anspruch 1, wobei das System (110) konfiguriert ist, um durch ein neuronales Netzwerkmodul die Ausführungszeit jeder API zu prognostizieren, wobei das neuronale Netzwerkmodul mit dem Prozessor (202) verknüpft ist.

4. System (110) nach Anspruch 3, wobei das System (110) ferner konfiguriert ist, um durch das neuronale Netzwerkmodul ein trainiertes Modell zu erzeugen, um das System für die Prognose der Ausführungszeit zu trainieren.

5. System (110) nach Anspruch 2, wobei das System (110) ferner konfiguriert ist, um basierend auf dem empfangenen Parametersatz ein kumulatives Service-Level-Agreement, SLA, jeder für jede Rechenvorrichtung (104) anwendbaren API zu bestimmen.

6. System (110) nach Anspruch 1, wobei das Verlaufsprotokoll der Ausführung der Vielzahl von APIs auf Kalenderereignissen zusammen mit Zeiten basiert, die für jede API-Ausführung in Bezug auf die für die API zur Ausführung bereitgestellte Datengröße benötigt werden.

7. System (110) nach Anspruch 5, wobei das System (110) ferner konfiguriert ist, um basierend auf dem Verlaufsprotokoll der Ausführung der Vielzahl von APIs zu prüfen, ob das kumulative SLA jeder API durch zunehmende Anfrage- oder Datenlast beeinflusst wird.

8. System (110) nach Anspruch 7, wobei das System (110) ferner konfiguriert ist, um das kumulative SLA aufrechtzuerhalten, wenn die tatsächliche Last basierend auf der Vorhersage der zukünftigen Last ansteigt.

9. System (110) nach Anspruch 8, wobei das System (110) ferner konfiguriert ist, um basierend auf der vorgenommenen Vorhersage und Optimierung eine Kombination aus Ausführung, Laufzeit und Datenverkehr in einer API-Warteschlange zu minimieren.

10. Verfahren zur Erleichterung der Prognose der Ausführung einer Vielzahl von Anwendungsprogrammierschnittstellen, APIs, wobei das Verfahren umfasst:
Empfangen (252), durch einen Prozessor (202), eines Parametersatzes von der einen oder den mehreren Rechenvorrichtungen (104), wobei der Parametersatz der Vielzahl von APIs zugeordnet ist, wobei der Prozessor (202) an die eine oder die mehreren Rechenvorrichtungen (104) in einem Netzwerk (106) gekoppelt ist, wobei der Prozessor (202) ferner mit einem Speicher (204) gekoppelt ist, der Anweisungen speichert, die durch den Prozessor (202) ausgeführt werden;
Empfangen (254), durch den Prozessor (202), eines Verlaufsprotokolls der Ausführung der Vielzahl von APIs von einer Datenbank, wobei das Verlaufsprotokoll der Ausführung der Vielzahl von APIs mit der Ausführung der Vielzahl von APIs verknüpft ist;
basierend auf dem empfangenen Parametersatz und dem empfangenen Verlaufsprotokoll der Ausführung der Vielzahl von APIs, Bestimmen (256), durch den Prozessor (202), einer Anzahl der für jeden Tag erforderlichen Ressourcen;
Vorhersagen (258), durch den Prozessor (202), einer zukünftigen Last auf jeder API basierend auf der Anzahl der für jeden Tag erforderlichen Ressourcen:
Prognostizieren (260), durch den Prozessor (202), einer für jede API erforderlichen Ausführungszeit basierend auf der Vorhersage der zukünftigen Last auf jeder API;
Optimieren der Anzahl der für jeden Tag erforderlichen Ressourcen basierend auf der Prognose der für jede API erforderlichen Zeit; und
Zuweisen einer oder mehrerer Ressourcen an eine API basierend auf der Optimierung der Anzahl der Ressourcen.

11. Verfahren nach Anspruch 10, wobei der Parametersatz eine Kombination von Werbe- und Umgebungsmerkmalen, Datengröße, Auslastung des Speichers der zentralen Verarbeitungseinheit, CPU, und der Grafikverarbeitungseinheit, GPU, die mit den APIs in einer Warteschlange verknüpft sind, einschließt.

12. Verfahren nach Anspruch 10, wobei das Verfahren ferner den Schritt des Prognostizierens der Ausführungszeit jeder API durch ein neuronales Netzwerkmodul umfasst, wobei das neuronale Netzwerkmodul mit dem Prozessor (202) verknüpft ist.

13. Verfahren nach Anspruch 10, wobei das Verfahren ferner den Schritt des Erzeugens eines trainierten Modells durch das neuronale Netzwerkmodul umfasst, um das System für die Prognose der Ausführungszeit zu trainieren.

## Revendications

1. Système (110) facilitant l'exécution de prévision d'une pluralité d'interfaces de programmation d'applications, API, le système (110) comprenant :
un processeur (202) couplé à un ou plusieurs dispositifs informatiques (104) dans un réseau (106), dans lequel le processeur (202) est en outre couplé à une mémoire (204), dans lequel ladite mémoire stocke des instructions qui, lorsqu'elles sont exécutées par le processeur (202), amènent le système (110) à :
recevoir (252) un ensemble de paramètres en provenance du ou des dispositifs informatiques (104), l'ensemble de paramètres étant associé à la pluralité d'API ;
recevoir (254) un journal historique d'exécution de la pluralité d'API à partir d'une base de données, le journal historique d'exécution de la pluralité d'API étant associé à l'exécution de la pluralité d'API ;
en fonction de l'ensemble de paramètres reçu et du journal historique d'exécution reçu de la pluralité d'API, déterminer (256) le nombre de ressources requises pour chaque jour ;
prédire (258) une charge future sur chaque dite API en fonction du nombre de ressources requises pour chaque jour ;
prévoir (260), un temps d'exécution requis pour chaque dite API en fonction de la prédiction de la charge future sur chaque dite API ;
optimiser le nombre de ressources nécessaires pour chaque jour en fonction de la prévision de temps requis pour chaque dite API ; et
allouer une ou plusieurs ressources à une API en fonction de l'optimisation du nombre de ressources.

2. Système (110) selon la revendication 1, dans lequel l'ensemble de paramètres comporte une combinaison de caractéristiques environnementales promotionnelles, de taille de données, d'utilisation d'une unité centrale de traitement, CPU, d'une mémoire et d'une unité de traitement graphique, GPU, associée aux API dans une file d'attente.

3. Système (110) selon la revendication 1, dans lequel le système (110) est configuré pour prévoir, par un module de réseau neuronal, le temps d'exécution de chaque dite API, dans lequel le module de réseau neuronal est associé au processeur (202).

4. Système (110) selon la revendication 3, dans lequel le système (110) est en outre configuré pour générer un modèle entraîné, par le module de réseau neuronal, pour entraîner le système pour la prévision du temps d'exécution.

5. Système (110) selon la revendication 2, dans lequel le système (110) est en outre configuré pour déterminer un accord de niveau de service, SLA, cumulatif de chaque API applicable pour chaque dispositif informatique (104) sur la base de l'ensemble de paramètres reçu.

6. Système (110) selon la revendication 1, dans lequel le journal historique d'exécution de la pluralité d'API est basé sur des événements de calendrier ainsi que sur les temps pris pour chaque exécution d'API par rapport à la taille de données fournie pour l'exécution de l'API.

7. Système (110) selon la revendication 5, dans lequel le système (110) est en outre configuré pour vérifier si le SLA cumulé de chaque dite API est affecté par une augmentation de la charge de demande ou de données sur la base du journal historique d'exécution de la pluralité d'API.

8. Système (110) selon la revendication 7, dans lequel le système (110) est en outre configuré pour maintenir le SLA cumulatif lorsque la charge réelle augmente sur la base de la prédiction de la charge future.

9. Système (110) selon la revendication 8, le système (110) est en outre configuré pour minimiser une combinaison d'exécution, de temps d'exécution et de trafic dans une file d'attente d'API en fonction de la prédiction et de l'optimisation effectuées.

10. Procédé facilitant l'exécution de prévision d'une pluralité d'interfaces de programmation d'applications, API, le procédé comprenant :
la réception (252), par un processeur (202), d'un ensemble de paramètres provenant du ou des dispositifs informatiques (104), l'ensemble de paramètres étant associé à la pluralité d'API, dans lequel le processeur (202) est couplé au ou aux dispositifs informatiques (104) dans un réseau (106), dans lequel le processeur (202) est en outre couplé à une mémoire (204) qui stocke des instructions exécutées par le processeur (202) ;
la réception (254), par le processeur (202), d'un journal historique d'exécution de la pluralité d'API à partir d'une base de données, le journal historique d'exécution de la pluralité d'API étant associé à l'exécution de la pluralité d'API ;
en fonction de l'ensemble de paramètres reçu et du journal historique d'exécution reçu de la pluralité d'API, la détermination (256), par le processeur (202), d'un nombre de ressources requises pour chaque jour ;
la prédiction (258), par le processeur (202), d'une charge future sur chaque dite API en fonction du nombre de ressources requises pour chaque jour :
la prévision (260), par le processeur (202), d'un temps d'exécution requis pour chaque dite API en fonction de la prédiction de la charge future sur chaque dite API ;
l'optimisation du nombre de ressources nécessaires pour chaque jour en fonction de la prévision de temps requis pour chaque dite API ; et
l'allocation d'une ou plusieurs ressources à une API en fonction de l'optimisation du nombre de ressources.

11. Procédé selon la revendication 10, dans lequel l'ensemble de paramètres comporte une combinaison de caractéristiques promotionnelles, environnementales, de taille de données, d'utilisation d'unité centrale de traitement, CPU, de mémoire et d'unité de traitement graphique, GPU, associée aux API dans une file d'attente.

12. Procédé selon la revendication 10, dans lequel le procédé comprend en outre l'étape de prévision, par un module de réseau neuronal, du temps d'exécution de chaque dite API, dans lequel le module de réseau neuronal est associé au processeur (202).

13. Procédé selon la revendication 10, dans lequel le procédé comprend en outre l'étape consistant à générer, par le module de réseau neuronal, un modèle entraîné pour entraîner le système pour la prévision du temps d'exécution.
